Europäisches Patentamt

European Patent Office

Office européen des brevets

(19)

(11) Publication number: **0 036 916**

**A1**

(12) # EUROPEAN PATENT APPLICATION

(21) Application number: **80301013.1**

(22) Date of filing: **01.04.80**

(51) Int. Cl.³: **A 01 G 27/00**

(43) Date of publication of application:
**07.10.81 Bulletin 81/40**

(84) Designated Contracting States:
**AT BE CH DE FR IT LI LU NL SE**

(71) Applicant: **VACTECH LIMITED**
**Maypool House The Street**
**Swallowfield Berkshire RG7 1QY(GB)**

(72) Inventor: **Woolnough, Ronald John**
**Maypool House The Street**
**Swallowfield Berkshire RG7 1QY(GB)**

(74) Representative: **Sheader, Brian N. et al,**
**ERIC POTTER & CLARKSON 5 Market Way Broad Street**
**Reading Berkshire, RG1 2BN(GB)**

(54) **Means for watering and or liquid feeding plants in containers.**

(57) Means for watering and or liquid feeding by capillary action a plant or plants in a container having an apertured base, the means comprising a reservoir (2) for liquid, said reservoir having an upstanding peripheral wall, a dish portion (1) having a base (5), an inner peripheral wall (10) upstanding from the base and an outer peripheral wall depending from the top of the inner peripheral wall, said outer peripheral wall being supported by said reservoir peripheral wall, at least one depression (6) in said base (5) which depends into the reservoir (2), apertures (8) communicating the interior of said at least one depression (6) with the interior of the reservoir (2), and further apertures (9) in the dish portion (1) above the highest liquid level (15) in the reservoir (2) communicating the interior of the dish portion (1) with atmosphere, said dish portion (1) and said at least one depression (6) adapted for filling with a material capable of capillarity so that when a plant in a container having an apertured base is placed on said material with the material in contact with the growing medium in the container through the apertures in the base of the container and the reservoir (2) is filled with water and or liquid feed the water and/or liquid feed will percolate up through said material in the dish portion (1) and into the growing medium in said container.

Fig. 2

0036916

The present invention relates to means for watering and/or liquid feeding by capillary action plants in containers having an apertured base.

It is well known that many pot-grown house plants suffer in health, and frequently die, because of incorrect watering and that for healthy plant growth it is essential not only that water reach the plant in correct quantities but that air also should reach the roots of the plant.

The present invention provides means for watering and/or liquid feeding by capillary action a plant or plants in a container having an apertured base, the means comprising a reservoir for liquid, said reservoir having an upstanding peripheral wall, a dish portion having a base, an inner peripheral wall upstanding from the base and an outer peripheral wall depending from the top of the inner peripheral wall, said outer peripheral wall being supported by said reservoir peripheral wall, at least one depression in said base which depends into the reservoir, apertures communicating the interior of said at least one depression with the interior of the reservoir, and further apertures in the dish portion above the highest liquid level in the reservoir communicating the interior of the dish portion with atmosphere.

In use, said at least one depression and the dish portion are filled with a material which is not harmful to plants and which is capable of capillarity, at least one plant in at least one container having an apertured base is placed on said material so that the material is in contact with the growing medium in the container through the apertures in the base of the container, and the reservoir is filled with water and/or a liquid feed. Water and/or liquid feed from

0036916

the reservoir passes into the material in said at least one depression through said apertures communicating the interior of the depression with the interior of the reservoir and percolates up through the material in the dish portion and into the growing medium in the plant container by capillary action. At the same time air can enter the medium in the dish portion through said apertures communicating the interior of the dish portion with atmosphere and from there can enter the plant container through the apertures in the base thereof. Thus both water and air can reach the roots of a plant or plants in the container.

The means may comprise a single dish portion or a plurality of dish portions, the or each dish portion preferably being intended to receive only a single plant container. Where the means comprises a plurality of dish portions, the dish portions may be associated with a common reservoir or each dish portion may have a separate reservoir associated therewith.

The or each dish portion may be separate from or integral with the reservoir or reservoirs.

The material with which said at least one depression and said dish portion are filled may be a suitable granular or fibrous material such as vermiculite, sand or peat, or even ordinary garden soil. Alternatively said material could comprise a suitably shaped block or mat of suitable porous material.

To reduce evaporative loss from the surface of said material, the dish portion is preferably designed to receive a plant container, e.g., a standard plant pot, of a predetermined size or sizes so that the surface of the material will be wholly or substantially covered by the base of the plant container. Alternatively, or in addition, at least the upper surface of said material may be covered by a skin or layer of moisture impervious material, such as a suitable plastics material, except where said material is covered by the base of the plant container.

In order that the invention may be more readily understood reference will hereinafter be made to the accompanying drawings, in which:-

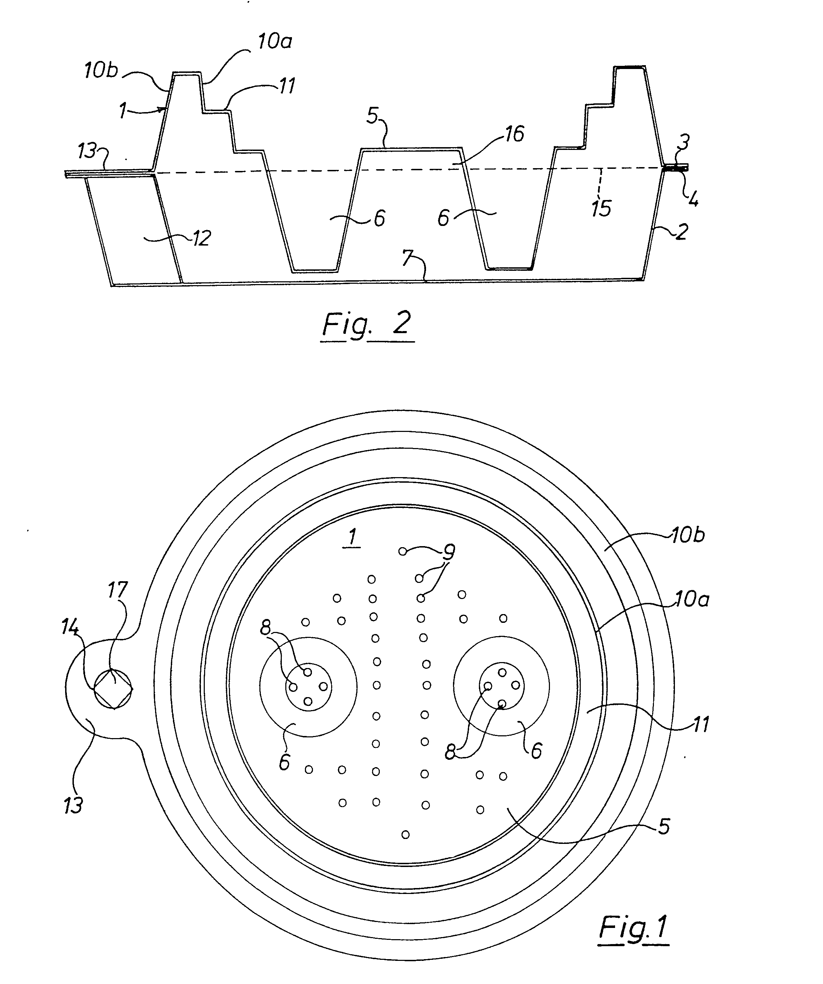

Figure 1 is a plan view of one embodiment of a means according to the present invention, and

Figure 2 is a sectional elevation thereof.

Referring to the drawings it will be seen that the means illustrated therein comprises a shallow dish portion 1 and a reservoir 2 for liquid beneath the dish portion 1. In the illustrated embodiment the dish portion 1 and the reservoir 2 are separately vacuum or pressure formed from plastics material and are then secured together by securing a peripheral flange 3 of the dish portion 1 to a peripheral flange 4 of the reservoir 2, e.g., as by means of a suitable adhesive. It will be understood however, that the means may be formed from any other suitable material and in any other suitable way, e.g., may be formed in water impervious, e.g., glazed, pottery or ceramics or even in metal. Although the dish portion 1 is preferably integral with or permanently secured to the reservoir 2, it could, if desired, be separate from the reservoir 2 and simply be loosely, supported thereon, suitable locating means being provided for locating the dish portion 1 on the reservoir 2.

The dish portion 1 comprises a base 5 having two depressions 6 therein which depend down into the reservoir 2 to adjacent the bottom 7 of the reservoir 2. Apertures 8 are provided in the bottom of the depressions 6 and communicate the interiors of the depressions 6 with the interior of the reservoir 2. Apertures 9 are provided in the base 5 of the dish portion 1 and communicate the interior of the dish portion 1 with atmosphere as will become apparent hereinafter. The dish portion 1 further comprises an upstanding inner peripheral wall 10a which is stepped as shown at 11 to provide a first, lower, level adapted to receive a standard plant pot of a first predetermined size and a second, upper, level adapted to receive a standard plant pot of a larger predetermined size and a depending outer peripheral wall 10b which terminates in the peripheral flange 3.

The reservoir 2 has an outward radial extension 12 which is covered by an outward radial extension 13 on the dish portion 1. The extension 13 on the dish portion 1 has a filler hole 14 therein so that the reservoir 2 can be filled with water and/or a liquid feed even when the means is in use. The filler hole 14 is below the level of the base 5 of the dish portion 1 so that the maximum liquid level 15 in the reservoir 2 is below the base 5 and an air space 16 is defined between the base 5 and the maximum liquid level 15. In order that air may enter the air space 16 the filler hole 14 is a square hole and is closed by a circular plug 17, although any other suitable venting arrangement may be used if desired.

0036916

In use, the depressions 6 and the dish portion 1 are filled with a material which is not harmful to plants and which is capable of capillarity as hereinbefore described. A plant in a container which is of a predetermined size and which has an apertured base is then placed on said material so that the material is in contact with the growing medium in the plant container through the apertures in the base of the plant container and the reservoir 2 is filled with water and/or a liquid feed through the filler hole 14. Water and/or liquid feed from the reservoir 2 passes into the depressions 6 through the apertures 8 and percolates up through the material in the dish portion 1 and into the growing medium in the plant container by capillary action. At the same time air from the air space 16 enters the medium in the dish portion 1 through the apertures 9 and from there passes into the growing medium in the plant container through the apertures in the base thereof.

To reduce loss of water and/or liquid feed by evaporation from the surface of the medium in the dish portion 1, the diameters of the upper and lower levels of the dish portion 1 are related to the diameters of the bases of standard plant pots of predetermined size so that there will be little or no clearance between the plant pot and the peripheral wall 10 of the dish portion 1. It will, of course, be understood that if the means is to be used with a plant in a plant pot of a said first predetermined size then the dish portion 1 will only be filled with a said material up to or just below the level of the step 11 whereas if it is to be used with a plant in a plant pot of said larger predetermined size then the dish portion 1 will be filled with a said material up to or just below the top of the dish portion 1.

To enable the means illustrated to be used with plant containers which are smaller in size than said first predetermined size the base 5 of the dish portion 1 may be provided with upstanding ribs or projections (not shown) for supporting such a plant container of smaller size. Such upstanding ribs or projections may be provided with further apertures 9, e.g., in the tops thereof.

Whilst the means illustrated is of substantially circular form for use with a single circular plant container such as a standard plant pot it will be understood that the means may be of any suitable shape for use with plant containers of any desired shape and may, if desired, be adapted for use with a plurality of plant containers. For example, where the means is intended to contain a row of plants in plant containers then the reservoir may be in the form of an elongated trough and a plurality of dish portions, which may be either separate or integral with one another, may be mounted on or secured to the reservoir.

If desired, provision can be made for a supply of liquid additional to that which can be contained in the reservoir 2. For example the filler hole 14 may be modified to receive an inverted drip feeder so that as the liquid level in the reservoir 2 falls below a predetermined level it will be automatically replenished from the drip feeder.

CLAIMS

1. Means for watering and/or liquid feeding by capillary action a plant or plants in a container having an apertured base, the means comprising a reservoir for liquid, said reservoir having an upstanding peripheral wall, a dish portion having a base, an inner peripheral wall upstanding from the base and an outer peripheral wall depending from the top of the inner peripheral wall, said outer peripheral wall being supported by said reservoir peripheral wall, at least one depression in said base which depends into the reservoir, apertures communicating the interior of said at least one depression with the interior of the reservoir, and further apertures in the dish portion above the highest liquid level in the reservoir communicating the interior of the dish portion with atmosphere.

2. Means according to claim 1, wherein said at least one depression extends down into the reservoir to adjacent the bottom of the reservoir.

3. Means according to claim 1 or 2, wherein said apertures communicating the interior of said at least one depression with the interior of the reservoir are provided in the bottom of said at least one depression.

4. Means according to claim 1, 2 or 3, wherein said outer peripheral wall of the dish portion extends

to below the level of the base whereby the base of the dish portion is above the maximum liquid level in the reservoir so that an air space is defined between the base of the dish portion and said maximum liquid level and wherein said apertures communicating the interior of the dish portion with atmosphere are provided in the base of the dish portion.

5.    Means according to any one of the preceding claims, wherein the inner peripheral wall of the dish portion is stepped to provide a first, lower, level of a first predetermined size and a second, upper, level of a larger predetermined size.

6.    Means according to any one of the preceding claims, wherein the reservoir has an outwardly extending filler portion.

7.    Means according to claim 6, wherein the dish portion has an outward extension thereon which covers said filler portion and which has a filler hole therein.

8.    Means according to claim 7, insofar as this is dependant upon claim 4, wherein venting means is provided whereby air can enter said air space.

9.    Means according to claim 8, wherein said venting means comprises a non-circular said filler hole and a circular plug partially closing the filler hole.

10. Means according to any one of the preceding claims, wherein the base of the dish portion is provided with upstanding ribs or projections for supporting a plant container.

11. Means according to claim 10, wherein said upstanding ribs or projections have apertures in the tops thereof.

12. Means according to any one of the preceding claims, comprising a plurality of dish portions.

13. Means according to claim 12, wherein said dish portions are associated with a common reservoir.

14. Means according to claim 12 or 13, wherein said dish portions are formed integrally with one another.

15. Means according to any one of the preceding claims, wherein the dish portion and the reservoir are separate from one another and locating means are provided for locating the dish portion on the reservoir.

16. Means according to any one of the preceding claims 1 to 14, wherein the dish portion and the reservoir are integral with one another.

17. Means according to claim 16, wherein the dish portion and the reservoir are formed separately and are then permanently secured together.

18.    Means according to any one of the preceding claims, wherein the dish portion and the reservoir are formed from plastics material.

19.    Means according to claim 18, wherein the dish portion and the reservoir are vacuum or pressure formed.

_Fig. 2_

_Fig.1_

0036916

| | European Patent Office | EUROPEAN SEARCH REPORT | Application number |
| | | | EP 80 30 1013 |

## DOCUMENTS CONSIDERED TO BE RELEVANT

| Category | Citation of document with indication, where appropriate, of relevant passages | Relevant to claim |
|---|---|---|
| | DE - A - 2 717 851 (STABLER)<br>* Page 10, last paragraph - page 12, second paragraph; figures 1,2 * | 1,2,8, 15,18, 19 |
| | -- | |
| | FR - E - 95 471 (RATTIN)<br>* Page 1, line 31 - page 2, line 21; figures 1,2 * | 1,2 |
| | -- | |
| | FR - A - 1 468 719 (ALLIBERT)<br>* Whole document * | 1,3,6, 8,15 |
| | -- | |
| | CH - A - 274 148 (TREIER)<br>* Whole document * | 1,2 |
| | ---- | |

### CLASSIFICATION OF THE APPLICATION (Int. Cl.³)

A 01 G 27/00

### TECHNICAL FIELDS SEARCHED (Int. Cl.³)

A 01 G 27/00
9/04

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims |
|---|---|

| Place of search | Date of completion of the search | Examiner |
|---|---|---|
| The Hague | 03-12-1980 | HERYGERS |

EPO Form 1503.1  06.78